# EUROPEAN PATENT SPECIFICATION

(11) **EP 1 701 998 B1**
(45) Date of publication and mention of the grant of the patent: **09.02.2011**
(21) Application number: 04808770.4
(22) Date of filing: 09.12.2004
(51) Int. Cl.: C08K 5/098, C08L 67/02, C08L 77/00

(54) **OXYGEN SCAVENGING COMPOSITION**
SAUERSTOFFABFANGZUSAMMENSETZUNG
COMPOSITION DESOXYGENANTE

(30) Priority: 17.12.2003 EP 03078901; 19.07.2004 EP 04077094
(43) Date of publication of application: 20.09.2006
(73) Proprietor: DSM IP Assets B.V., 6411 TE Heerlen (NL)
(72) Inventor: STROEKS, Alexander, Antonius, Marie, NL-6301 HL Valkenburg aan de Geul (NL); GIJSMAN, Pieter, NL-6191 NM Beek (NL); SLOT, Johan, Josephus, Machiel, B-2360 Oud-Turnhout (BE)
(74) Representative: Verhaegen, Ilse Maria M.
(86) International application number: PCT/NL2004/000854
(87) International publication number: WO 2005/059019

(56) References cited:
- WO-A-01/10947
- WO-A-99/15433

## Description

The invention relates to an oxygen scavenging composition comprising a polycondensate, a copolymer comprising polypropylene oxide segments and polymer segments and an oxidation catalyst.

Such a composition is known from WO 99/15433. In this document an oxygen scavenging composition is prepared by reactive extrusion of the polymer segments, in particular a polycondensate, and a functionalised polypropylene oxide oligomer. The resulting product, denoted as copolycondensate is applied as such in single layer or multi layer films or is diluted with further polycondensate.

It has appeared that this diluted composition has a restricted efficiency in oxygen scavenging properties, making it necessary to apply thicker layers to obtain a certain degree of active oxygen barrier properties.

Aim of the invention is a composition comprising a polycondensate and a copolymer comprising polypropylene oxide segments and polymer segments that shows better active oxygen barrier properties than the known composition.

This is achieved according to the invention in that the copolymer has been prepared by copolymerising the corresponding monomers in the presence of functionalised polypropylene oxide segments.

Surprisingly it has appeared that the fact that the polymer segments have been formed from copolymerisation of the corresponding monomers with functionalised polypropylene oxide segments rather than having these functionalised polypropylene oxide segments react with already polymerised polymer segments causes a considerable difference in oxygen scavenging properties of the final, diluted composition.

The composition according to the invention shows brings highly advantageous active oxygen scavenging properties to the polycondensate in the composition. Polycondensates, also known as condensation polymers, among which polyesters and in particular polyamides, form a certain barrier for oxygen and are for this and other reasons applied as films, wraps, bottles, vessels or other containers for feed and foods and drinks. They protect the packed goods from direct contact with the environment, including the oxygen in ambient air. Since layers of these polymers are not completely impermeable to oxygen it is known to mix a compound into the polymer that is able to scavenge oxygen permeating into the polymer layer by a chemical reaction binding the oxygen.

Such compounds are known as active oxygen scavengers. Among these polyalkylene oxides and polydienes have been reported to be examples of active oxygen scavengers. It is also known to apply oxygen scavengers that are reactive with polycondensate and to make the scavenger react with the polycondensate during the mixing, e.g. by reactive extrusion.
Examples of polycondensates that can be applied with favorable results in the composition according to the invention are polyesters and polyamides. Examples of suitable polyesters are polyethylene terephtalate (PET), polybutylene terephtalate (PBT), polyethylene naphtanoate (PEN), polybutylene naphtanoate (PBN). Examples of suitable polyamides (PA) are aliphatic polyamides, that may eventually be branched polyamides, such as PA6, PA4,6, PA6,6, PA 11, PA12, semi aromatic polyamides as MXD6, PA6,I/6,T, PA6,6/6,T, fully aromatic polyamides and copolymers and blends of the listed polyamides and polyesters. The effect of the invention is most favourable in compositions comprising aliphatic polyamide as the polycondensate since these polyamides as such have lower oxygen barrier properties than e.g. aromatic polyamides.

As the oxygen scavenging compound in the composition according to the invention a copolymer comprising functionalised polypropylene oxide (PPO) segments and polymer segments is used, that has been prepared by polymerising the corresponding monomers of the polymer in the presence of polypropylene oxide segments. This is different than the copolymers known from the prior art that are obtained by reactive extrusion of functionalised PPO oligomer segments and preformed polymer segments of certain length or molecular weight. In the production process known from WO 99/15433 the PPO oligomer segments usually are functionalized with end groups that can react with reactive sites of the polymer. Examples of such functional end groups and reactive polymer sites are e.g. known from WO 99/15433. The same functionality may have been applied in the copolymerisation process of the copolymer applied in the present invention.

Suitable PPO segments are linear oligomers of PPO and are preferably of the substituted type. In IUPAC nomenclature this PPO is denoted as polypropylene glycol (polyoxy-1,2-propanediyl). They consist of 2 to 5000 polypropylene oxide monomer units, preferably of 10 to 2500 units and in this shape and size they have been copolymerised with the monomers. In this range an even distribution of the copolymers in the polycondensate appears to be achieved. During this copolymerisation copolymers of the -ABABA- type are formed comprising polymer segments A of variable length alternated with propylene oxide segments B.

In another embodiment the PPO segments are present as branches in a two, three, four or higher star branched compound the centre unit of which can be e.g. a di-, tri-, tetra or higher functional ester, amide, ether, urethane. In the process of preparation of the copolymer applied in the composition of the invention, the polymer segments then grow from the free ends of the PPO segment branches. During this copolymerisation linear copolymers can be formed of the type ABA or branched copolymers having branches of the type BA.

Apart from the PPO segments also other ether segments optionally may be present as e.g. polyethylene oxide, however in smaller amounts than the PPO. Preferably the other ether segments are present in amounts less than 40 wt%, more preferably less than 30 wt% or less than 10 wt% of the amount of PPO.

Suitable polymer segments in the copolymers that have been formed by copolymerising the corresponding monomers in the presence of the PPO segments are those defined above for the polycondensate, in particular polyesters, preferably PBT, and aliphatic polyamides, preferably PA6 or PA6,6.

These copolymers can be formed by reacting the functionalised PPO in the presence of the monomers at conditions well known for the polymerisation of the corresponding monomers or according to US 4590243 and EP 0067695.

In these processes, apart from the monomers and the PPO segments, also other compounds can be present, for example catalysts, chain stoppers, stabilisers and the like. Linear PPO segments are introduced in these reactions as divalent moieties that are functionally terminated at their ends, e.g. with hydroxy, amino or acid or other groups that are capable reacting with the monomers the polymer part is polymerised from. In star branched type PPO segments the free ends, i.e. those ends of the PPO part of the PPO segment that are not bound to the centre moiety of the star, are functionalised with the groups mentioned above.

In copolymers that can be applied in the composition according to the invention the relative amount of the PPO can be between 0.5 or 1 and 95 wt% and preferably it is between 2 and 85 or 5 and 75 or 5 and 60 wt%.

In a composition comprising the polycondensate and the copolymer the relative amount of the PPO will be lower by the diluting effect of the polycondensate. In the final composition the relative amount of the PPO with respect to the total of copolymer, if applicable including compounds resting from its polymerisation process, and polycondensate, may vary within the range of 0.5 to 50 wt%, preferably of 1 to 30 wt%. Lower amounts will diminish in particular the period during which the oxygen scavenging properties will remain at a high level. Higher amounts may lead to the formation of a co-continuous phase of PPO segments in the composition. This is detrimental for the total oxygen barrier capacity of the composition and therefore the amount of PPO in the composition should be taken so that the PPO forms a disperse phase in the composition. It will be understood that a certain desired relative amount of PPO in the composition according to the invention can be achieved by several combinations of the amount of PPO in the copolymer and the amount of copolymer mixed into the composition.

In this respect it is also relevant that the copolymer is sufficiently compatible, i.e. miscible on a sub-micron scale, with the polycondensate. This miscibility is positively influenced by the amount and type of the polymer in the copolymer and the amount of PPO in the final composition. By varying these amounts within the ranges described above the skilled person will be able to obtain a good dispersion of the oxygen scavenging copolymer in a polycondensate and advantageously small conglomerates of the oxygen scavenging PPO segments in the composition to achieve a desired oxygen scavenging effect. These conglomerates may be spherical and having a size, i.e. a diameter or a smallest axis, an axis being defined as a line connecting two diametrically located points on the surface of the conglomerate, of up to 500 nm and preferably at most 30 or more preferably at most 25% of the conglomerates have a diameter or smallest axis above 500 nm. Spherical is to be understood as having the same or nearly the same dimension in the three spatial directions, deviating from a spherical shape to such extent only that the length of an axis, is at most 1.3 times the length of the diameter of a sphere having the same volume. Preferably at least 50% of the conglomerates have a size of at most 300 nm and preferably of at most 200 nm. More preferably at least 70, 90 or even 99 % of the conglomerates is within the specified ranges. A lower conglomerate size has appeared to lead to better oxygen barrier properties.

It was further found that an object, comprising a layer of the composition according to the invention, shows enhanced oxygen scavenging performance when a majority of the conglomerates in their shapes have an aspect ratio and in majority are oriented. Such conglomerates can have an elongated or flattened shape, like a cigar or pancake shape. A conglomerate having an aspect ratio is characterized by the feature that its dimension in at least one spatial direction is larger than its dimension in at least one other spatial direction. The ratio between said dimensions preferably is at least 1.3 and more preferably at least 2 or even 5 or even 50 or more than 100. This is contrast to conglomerates that have essentially the same dimension in the three spatial directions. Oriented here means that the largest dimension extends in a spatial direction parallel to a surface of the object that is exposed to oxygen to be scavenged. This largest dimension of the conglomerate in said parallel direction may be larger than 500 nm, even up to some millimetres, the achievable upper boundary only being restricted by practical technical limitations. However, the dimension of the conglomerate perpendicular to said surface preferably is below 400 nm and more preferably below 350 nm. This appears to enhance the transparency of the oxygen-scavenging layer in the object significantly. An object containing conglomerates having an aspect ratio can be obtained by subjecting the object during or after it being manufactured to an orientating step, e.g. by exposing it to shear in a molten state, by pressing and in particular by drawing in one or more directions.

The invention thus also relates to an object, having at least one surface that is to be exposed to an oxygen containing environment, and comprising a layer containing the composition according to the invention in which conglomerates of the PPO segments are present, of which conglomerates at least 50 %, preferably at least 70 % and more preferably at least 90 % have a dimension in at least one spatial direction that is larger than a dimension in at least one other spatial direction by a factor of at least 1.3, and in which said larger dimension extends in a spatial direction parallel to the at least one surface of the object.

Miscibility is enhanced when the polycondensate and the polymer part of the oxygen scavenging copolymer are of the same type, e.g. when they both are polyamides or polyesters. Nevertheless also certain polyesters may show sufficient compatibility with certain polyamides to obtain a composition containing conglomerates as described hereafter of a desired size. Compatibility can be enhanced by applying methods or adding compounds known per se for this purpose or catalysts for rearrangement reactions between the polycondensate and the polymer segments of the copolymer.

The composition according to the invention further preferably comprises an oxidation catalyst, promoting the oxygen scavenging activity of the oxygen scavenging compound.

Suitable oxidation catalysts include transition metal catalysts, which can readily switch between at least two oxidation states. Preferably, the transition metal is in the form of a transition metal salt or transition metal complex, wherein the metal is selected from the groups 4, 5, 6, 7, 8, 9, 10, 11 and 12 of the periodic system of the elements. Suitable metals include Manganese II or III, Iron II or III, Chromium II or III, Cobalt II or III, Copper I or II, Nickel II or III, Rhodium II, or II or IV and Ruthenium I, II or IV, Titanium III or IV, Vanadium III, IV or V.

Preferably Co II or III is used as the metal part in the catalyst.

Suitable counterions for the metal include, but are not limited to, chloride, acetate, acetylacetonate, stearate, propionate, palmitate, 2-ethylhexanoate, neodecanoate or naphtenate. The metal may also be an ionomer, in which case a polymeric counter ion is employed. Such ionomers are well known in the art. As an example of a suitable complexing moiety phthalocyanine is mentioned. The transition metal compounds may be present between 10ppm and 10wt%.

Preferably the amount of transition metal compound is between 50 and 5000 ppm.

Further the composition according to the invention may comprise other usual additives that may give a certain additionally required property to the composition, examples of which are reinforcing materials such as fibres, fillers, antioxidants, flame retardants, mould release agents and other compounds known in the art for this purpose.

The composition according to the invention has excellent oxygen barrier properties, e.g. it has on oxygen barrier lower than 0.3 preferably lower than 0.1 cc.mm/(m²*da*atm) when measured according to ASTM standard D3985 under dry conditions on a film having a thickness of 60 µm.

The composition of the invention can be applied as a layer in multi-layer films, preferably as an inner layer, sandwiched between other layers. In such a sandwich construction the active lifetime and effectiveness of the composition is considerably enhanced in comparison with a layer that is directly exposed to the environment. Further applications are layers in the wall of bottles, vessels or other containers, in particular those applied for packaging of foods or other substances that degrade in quality under the influence of oxygen. The inventions thus further relates to the use of the composition according to the invention for the applications mentioned. Suitable methods for this are known per se and are the commonly used shaping and manufacturing techniques for polymer materials.

The invention further relates to a process for preparing an oxygen scavenging composition comprising a polycondensate and a copolymer comprising polypropylene oxide segments and polymer segments, characterized in that the polycondensate is melt-mixed with a copolymer that has been prepared by polymerising the corresponding monomers constituting the polymer in the presence of the polypropylene oxide segments.

A process for preparing an oxygen scavenging composition comprising a polycondensate and a copolymer comprising polypropylene oxide segments and polymer segments is known from WO 99/15433. In this known process PPO segments functionalized at their ends with moieties that can react with the polycondensate are mixed in an extruder under conditions where the functionalized moieties can react with the functional groups in the polycondensate, i.e. the process is a reactive extrusion process.

Surprisingly it has been found that an oxygen scavenging copolymer prepared with the process of the invention that has been mixed under comparable conditions and for comparable times show better oxygen scavenging properties than the compositions prepared with the known process.

The process according to the invention can be conducted in the equipment known in the art for mixing thermoplastic polymers such as extruders and mixers. The process applies melt mixing, i.e. the mixing takes place above the melting point of both the polycondensate and of the oxygen scavenging copolymer but below the decomposition temperature of both components.

The invention will be elucidated by the following examples without being restricted thereto.

### Experiment 1: Preparation of oxygen scavenging copolymers

### Preparation of copolymer 1

A 2 L reactor equipped with distillation column and stirrer was charged with 332,0 g ε-caprolactam, 500,0 g polyoxypropylenediamine, 2,0 g; 85 m% phosphoric acid in water solution and 36,4 g adipic acid. After 3 times having flushed the reactor with nitrogen, the reactor content was heated under stirring and atmospheric pressure gradually within one hour to a temperature of 205 °C and kept at this temperature for 19 hours. Subsequently it was further heated to 210°C for another 3 hours. The polymerised product was released from the reactor, under nitrogen pressure, and ground. It was then extracted three times with excess boiling water and dried overnight in a vacuum stove under nitrogen atmosphere at 90 °C.

### Preparation of copolymer 2

A 2 L reactor equipped with distillation column and stirrer was charged with 410 g dimethylterephthalate, 290 g 1,4-butane diol, 550 g of a propyleneoxide based oligomer, 250 mg of titanium tetrabutoxide, 150 mg of magnesium acetate tetrahydrate and 590 mg N,N'-Hexamethylenebis(3,5-di-(tert)-butyl-4-hydroxyhydrocinnamamide).
After 3 times having flushed the reactor with nitrogen, the reactor content was heated under stirring and atmospheric pressure gradually within one hour to a temperature of 150°C, kept at this temperature for half an hour, and subsequently further heated within 2 hours to a temperature of 220°C. The thus obtained transesterified product was then further polymerised at 240°C under vacuum (down to 2 mbar) for 180 minutes at a stirring speed of 20 RPM. The polymerised product was released from the reactor, under nitrogen pressure, in the form of a strand, cooled in water and granulated in a pelletiser.

### Preparation of copolymer 3

A flask equipped with stirrer, thermocouple and nitrogen inlet was charged with caprolactam (55.6 wt%) and a PPO-containing oligomer (Brüggemann P1-30, polypropyleneglycol ester acyl caprolactam) (44.4 wt%). This mixture was diluted in a 1:1 fashion with a catalyst solution (Brüggemann C1, 12% caprolactam magnesium bromide in caprolactam). After mixing at 100°C the resulting mixture was poured in a mould and kept for 5 minutes at 145°C. The solid co-polyamide, containing 20 wt% polypropylene glycol, was removed from the mould and ground.

### Experiment 2: Preparation of oxygen scavenging blends 1-7, A1, A2 and B

Four blends (1-4) based on copolymer 1 and polyamide 6 (DSM Akulon F132-E, viscosity number 210 ml/g ISO 307, Relative Viscosity measured in 90% formic acid at 30 °C: 3.20) were prepared varying the blend composition and the oxidation catalyst content. Further, one blend (5) based on copolymer 2, additionally containing 0.05 wt% Irganox 1098, and one blend (6) based on copolymer 3 were prepared, both containing the same polyamide 6 as blends 1-4. Furthermore, a blend (7) was prepared based on copolymer 1 and a branched polyamide-6 (Relative Viscosity measured in 90% formic acid at 30 °C: 3.12). All these blends were prepared in a conical co-rotating fully intermeshing lab-scale twin-screw extruder. Cobalt acetate was added as the oxidation catalyst.

The mixing was carried out at a barrel temperature of 260°C, a rotation speed of 120 rpm and a residence time of 3 minutes. All experiments were carried out under nitrogen atmosphere. The polyamide was dried before processing. Blends prepared were stored in sealed bags after processing. For comparison, compositions A1 and A2 based on a functionalised PPO oligomer (Jeffamine D-2000 of Huntsman) and polyamide 6 have been prepared by a reactive extrusion process on the lab-scale twin-screw extruder with residence times of 3 and 5 minutes. Also a blend B not containing an oxygen scavenging compound was prepared. Blend compositions are given in Table 1.

**Table 1**

| Blend | Oxygen scavenging compound (OSC) | OSC amount (wt%) | Akulon F132-E (wt%) | Akulon XP 36-E (wt%) | PPO blend content (wt%) | Co(Ac)₂ content (ppm) |
|---|---|---|---|---|---|---|
| 1 | Copolymer 1 | 8 | 91.9 | - | 4.8 | 1000 |
| 2 | Copolymer 1 | 8 | 91.99 | - | 4.8 | 100 |
| 3 | Copolymer 1 | 11 | 88.9 | - | 6.6 | 1000 |
| 4 | Copolymer 1 | 17 | 82.9 | - | 10.2 | 1000 |
| 5 | Copolymer 2 | 8 | 91.9 | - | 3.0 | 1000 |
| 6 | Copolymer 3 | 25 | 74.9 | - | 5 | 1000 |
| 7 | Copolymer 1 | 8 | 0 | 91.9 | 4.8 | 1000 |
| A1 | Jeffamine* D-2000 | 4.8 | 95.1 | - | 4.8 | 1000 |
| A2** | Jeffamine* D-2000 | 4.8 | 95.1 | - | 4.8 | 1000 |
| B | None | - | 99.9 | - | - | 1000 |

| | | | | | | |
|---|---|---|---|---|---|---|
| * Amine end-capped PPO of Huntsman **: residence time 5 minutes | | | | | | |

### Experiment 3: Preparation of oxygen scavenging films of blends 1-7, A1, A2 and B

All blends were ground under cryogenic conditions. The resulting powders were pressed between flat hot plates into films with a thickness in the range 55-75 micrometer. The dimensions of the film were 13*13 cm². Pressing conditions were: plates temperature: 260°C, time between plates without pressure: 5 min, subsequently pressurizing the system for 3 minutes at 10kN. The morphology of the film of blend 5 (containing 8% copolymer 2) was determined with transmission electron microscopy. The shape of the dispersed copolymer 2 particles in PA6 matrix was spherical with a diameter of about 0.5 µm.

### Experiment 4: Preparation of oxygen scavenging blend 8.

A blend based on 8 wt.% copolymer 2, 0.1wt-% Cobalt acetate in polyamide 6 (DSM Akulon F132-E, viscosity number 210 ml/g ISO 307, Relative Viscosity measured in 90% formic acid at 30 °C: 3.20) was prepared on a ZSK 25mm co-rotating twin-screw extruder (temperature of the melt as measured by hand held thermometer at the exit of the extruder: 290°C, screw speed: 300 rpm).

### Experiment 5: Preparation of oxygen scavenging films of blends 8 and of pure PA6 (Composition C)

Transparent films with dimensions 300 mm (wide) / 40 µm (thick) of blend 8 were made by a film cast process with the following apparatuses and corresponding settings:
Extruder: Göttfert 32 mm/3D, screw speed 90 rpm, temperature setting 260°C, slit die with dimensions: 320 mm(wide)/0.4 mm (thick), chill roll at 110°C and speed adjusted to obtain a film thickness of 40µm.

The morphology of the film was determined with transmission electron microscopy. The shape of the dispersed copolymer 2 particles in PA6 matrix was ellipsoidal with a ratio of long axis I : short axis d of 7.8 with a standard deviation of 2.3 and d< 400µm. The particles were oriented in the extrusion direction.

As reference on the same machine with the same settings a straight PA6 film of DSM Akulon F132-E was made as reference.

### Experiment 5: Preparation of oxygen scavenging films based on PET and Copolymer 2 and on pure PET.

Copolymer 2 granules were wettened with a Co-acetetate solution in tetrahydrofuran and subsequently dried. These granules were dry blended with polyethyleneterephtalate (Arnite D04 300) (PET) granules to obtain a PET composition containing 8 wt% copolymer 2 and 1000 ppm Co-acetate (blend 9). From this mixture films having a thickness of 50 µm were made by a film cast process with the following apparatuses and corresponding settings:
Extruder: Battenfeld 45 mm, temperature setting 270°C, screw speed: 15rpm, slit die having dimensions: 250 mm(wide)/ 0.5 mm (thick), chill roll, 18°C, speed adjusted to obtain a film thickness of 50-54µm.

As reference on the same machine with the same settings a straight PET film was made as reference.

### Examples I - XI and Comparative Experiments A-E: Measuring of oxygen permeability of films

The oxygen permeability of the prepared films was measured by a MOCON OX-TRAN 2/21 permeameter according to ASTM D3985 by exposing the films to a nitrogen environment on one side and an oxygen atmosphere at the other side of the films leading to an oxygen partial pressure difference over the films of 1 bar. The permeability tests were conducted under dry conditions and, unless otherwise stated, at room temperature (23°C). For the PA6 based films the measurements were started after 50 hours conditioning at the measurement conditions and for the PET based blends after 50 (example X) and 130 hours (example XI)
In Table 2 the oxygen permeability is presented for the various films. The oxygen permeability is normalised with respect to film thickness.

**Table 2**

| Experiment/Comparative Example | Film made of blend no. | Oxygen permeability cc.mm/(m²*day*atm) |
|---|---|---|
| I | 1 | 0.00 |
| II | 1 | 0.00 (85% rel. humidity) |
| III | 2 | 0.19 |
| IV | 3 | 0.00 |
| V | 4 | 0.00 |
| VI | 5 | 0.07 |
| VII | 6 | 0.00 |
| VIII | 7 | 0.00 |
| IX | 8 | 0.01 |
| X | 9 | 2.24 |
| XI | 9 | 2.56 |
| Comp. A | A1 | 0.46 |
| Comp. B | A2 | 0.47 |
| Comp. C | B | 1.03 |
| Comp. D (PA6 reference) | | 1.01 |
| Comp. E (PET reference) | | 3.89 |

The detection limit of the Oxtran permeameter is 5*10⁻³ cc/(m2.day.atm). For the given thickness range of the samples, this leads to an intrinsic permeability limit of about 4*10⁻⁴ CC.mm/(m².day.atm). The intrinsic oxygen permeability of samples made from blends 1,3, 4 and 6 is smaller than 4*10⁻⁴ cc.mm/(m².day.atm).

These results show that the PA6 based oxygen scavenging compositions according to the invention have oxygen permeability values in the range 0.00 - 0.07 cc.mm/(m².day.atm) for compositions containing 1000 ppm of oxidation catalyst, both under dry conditions and at 85% relative humidity. These values are much lower than the value for Comparative experiment A and B, which were prepared according to the process disclosed in WO 99/15433 and much lower than the value belonging to comparative example C. Even when the composition according to the invention contains only 100 ppm of the oxidation catalyst (Exp. III), the oxygen permeability is still significantly lower than that of the prior art blend film. Comparing the oxygen permeability results of example VI with example IX shows that a composition containing particles having an aspect ration shows lower oxygen permeability values than a composition containing spherical scavenging particles. Example X and XI in comparison with example E (PET reference) show that addition of an oxygen scavenging material (copolymer 2) and a transition metal catalyst to PET leads to a lowering of the oxygen permeability value.

## Claims

1. Oxygen scavenging composition comprising a polycondensate, a copolymer comprising polyoxy-1,2-propanediyl segments and polymer segments and an oxidation catalyst, **characterized in that** the copolymer has been prepared by copolymerising the corresponding monomers in the presence of functionalised polyoxy-1,2-propanediyl segments,

2. Oxygen scavenging composition according to claim 1, wherein the polymer segments are polyamide or polyester.

3. Oxygen scavenging composition according to claim 1 or 2, wherein the polycondensate is (co)polyamide or (co)polyester or mixtures thereof.

4. Oxygen scavenging composition according to any of claim 1 - 3, wherein the polycondensate and the polymer segments are of the same type.

5. Oxygen scavenging composition according to any of claims 1 - 4, wherein the amount of polyoxy-1,2-propanediyl segments is from 0.5 to 50 wt% with respect to the composition.

6. Oxygen scavenging composition according to claim 5, wherein said amount is in the range from 1 to 30 wt%.

7. Oxygen scavenging composition according to any of claims 1 - 6, wherein the polyoxy-1,2-propanediyl segments are present as conglomerates and at most 25% of the conglomerates have a size above 500nm.

8. Oxygen scavenging composition according to any of claims 1 to 7, wherein the oxidation catalyst is a transition metal salt or complex.

9. Process for preparing an oxygen scavenging composition according to any of claims 1 to 8, **characterized in that** a polycondensate is melt-mixed with a copolymer that has been prepared by copolymerising the corresponding monomers constituting the polymer segments in the presence of functionalised polyoxy-1,2-propanediyl segments and **in that** an oxidation catalyst is added.

10. Process for preparing an oxygen scavenging composition according to any of claims 1 to 8, **characterized in that** the copolymer is prepared by copolymerising the corresponding monomers constituting the polymer segments in the presence of functionalised polyoxy-1,2-propanediyl segments and the copolymer is melt mixed with a polycondensate and **in that** an oxidation catalyst is added.

11. Use of the oxygen scavenging composition according to any of claims 1 to 8 or prepared by the process of claims 9 or 10 for the preparation of an oxygen-scavenging object.

12. Use according to claim 11, wherein the object is a container for food, drink or feed packaging such as a film, a bottle, a vessel or a wrap.

13. Use according to claim 11, wherein the object is a multilayer object in which a layer of the oxygen scavenging composition is sandwiched between two layers of another material.

14. Object, having at least one surface that is to be exposed to an oxygen containing environment, and comprising a layer containing the composition according to any of claims 1 to 8 or prepared by the process of claims 9 or 10, in which conglomerates of the poiyoxy-1,2-propanediyl segments are present, of which conglomerates at least 90% has a dimension in at least one spatial direction that is larger than a dimension in at least one other spatial direction by a factor of at least 1.3, and in which said larger dimension extends in a direction parallel to the at least one surface.

15. Object according to claim 14, wherein the dimension of at most 25% of the conglomerates in a direction perpendicular to the at least one surface is less than 350 nm.

16. Object according to claim 14, wherein the object is a container for food, drink or feed packaging such as a film, a bottle, a vessel or a wrap.

17. Object according to claim 14, wherein the object is a multilayer object in which a layer of the oxygen scavenging composition is sandwiched between two layers of another material.

## Patentansprüche

1. Sauerstoffabfangzusammensetzung, enthaltend ein Polykondensat, ein Copolymer mit Polyoxy-1,2-propandiyl-Segmenten und Polymersegmenten und einen Oxidationskatalysator, **dadurch gekennzeichnet, daß** das Copolymer durch Copolymerisation der entsprechenden Monomere in Gegenwart von funktionalisierten Polyoxy-1,2-propandiyl-Segmenten hergestellt worden ist.

2. Sauerstoffabfangzusammensetzung nach Anspruch 1, worin es sich bei den Polymersegmenten um Polyamid oder Polyester handelt.

3. Sauerstoffabfangzusammensetzung nach Anspruch 1 oder 2, worin es sich bei dem Polykondensat um (Co)Polyamid oder (Co)Polyester oder ein Gemisch davon handelt.

4. Sauerstoffabfangzusammensetzung nach einem der Ansprüche 1 - 3, worin das Polykondensat und die Polymersegmente vom gleichen Typ sind.

5. Sauerstoffabfangzusammensetzung nach einem der Ansprüche 1 - 4, worin die Menge an Polyoxy-1,2-propandiyl-Segmenten 0,5 bis 50 Gew.-%, bezogen auf die Zusammensetzung, beträgt.

6. Sauerstoffabfangzusammensetzung nach Anspruch 5, worin die Menge im Bereich von 1 bis 30 Gew.-% liegt.

7. Sauerstoffabfangzusammensetzung nach einem der Ansprüche 1 - 5, worin die Polyoxy-1,2-propandiyl-Segmente in Form von Konglomeraten vorliegen und höchstens 25% der Konglomerate eine Größe über 500 nm aufweisen.

8. Sauerstoffabfangzusammensetzung nach einem der Ansprüche 1 - 7, worin es sich bei dem Oxidationskatalysator um ein Übergangsmetallsalz oder einen Übergangsmetallkomplex handelt.

9. Verfahren zur Herstellung einer Sauerstoffabfangzusammensetzung nach einem der Ansprüche 1 bis 8, **dadurch gekennzeichnet, daß** man ein Polykondensat in der Schmelze mit einem Copolymer, das durch Copolymerisation der entsprechenden Monomere, die die Polymersegmente bilden, in Gegenwart von funktionalisierten Polyoxy-1,2-propandiyl-Segmenten hergestellt worden ist mischt und dann einen Oxidationskatalysator zugibt.

10. Verfahren zur Herstellung einer Sauerstoffabfangzusammensetzung nach einem der Ansprüche 1 bis 8, **dadurch gekennzeichnet, daß** man das Copolymer durch Copolymerisation der entsprechenden Monomere, die die Polymersegmente bilden, in Gegenwart von funktionalisierten Polyoxy-1,2-propandiyl-Segmenten herstellt und das Copolymer in der Schmelze mit einem Polykondensat mischt und einen Oxidationskatalysator zugibt.

11. Verwendung der Sauerstoffabfangzusammensetzung nach einem der Ansprüche 1 bis 8 oder hergestellt mit dem Verfahren des Anspruchs 9 oder 10 zur Herstellung eines sauerstoffabfangenden Gegenstands.

12. Verwendung nach Anspruch 11, bei der es sich bei dem Gegenstand um einen Behälter zur Verpackung von Lebensmitteln, Getränken oder Futtermitteln wie einen Film, eine Flasche, ein Gefäß oder eine Hülle handelt.

13. Verwendung nach Anspruch 11, bei der es sich bei dem Gegenstand um einen mehrschichtigen Gegenstand handelt, in dem eine Schicht der Sauerstoffabfangzusammenstezung sandwichartig zwischen zwei Schichten aus einem anderen Material angeordnet ist.

14. Gegenstand, der mit mindestens eine Oberfläche, die einer sauerstoffhaltigen Umgebung auszusetzen ist, aufweist und eine Schicht, die die Zusammensetzung nach einem der Ansprüche 1 bis 8 oder hergestellt mit dem verfahren des Anspruchs 9 oder 10 enthält, in der Konglomerate der Polyoxy-1,2-propandiyl-Segmente vorliegen, wobei mindestens 90% der Konglomerate eine Abmessung in mindestens einer Raumrichtung aufweisen, die um einen Faktor von mindestens 1,3 größer ist als die Abmessung in mindestens einer anderen Raumrichtung, und worin die größere Abmessung sich in einer zu der mindestens einen Oberfläche parallelen Richtung erstreckt.

15. Gegenstand nach Anspruch 14, bei dem die Abmessung von mindestens 25% der Konglomerate in einer zu der mindestens einen Oberfläche senkrechten Richtung weniger als 350 nm beträgt.

16. Gegenstand nach Anspruch 14, bei dem es sich um einen Behälter zur Verpackung von Lebensmitteln, Getränken oder Futtermitteln wie einen Film, eine Flasche, ein Gefäß oder eine Hülle handelt.

17. Gegenstand nach Anspruch 14, bei dem es sich um einen mehrschichtigen Gegenstand handelt, in dem eine Schicht der Sauerstoffabfangzusammensetzung sandwichartig zwischen zwei Schichten aus einem anderen Material angeordnet ist.

## Revendications

1. Composition piégeuse d'oxygène, comprenant un polycondensat, un copolymère comprenant des segments de polyoxy-1,2-propanediyle et des segments de polymère et un catalyseur d'oxydation, **caractérisée en ce que** le copolymère a été préparé par copolymérisation des monomères correspondants en présence de segments de polyoxy-1,2-propanediyle fonctionnalisés.

2. Composition piégeuse d'oxygène selon la revendication 1, **caractérisée en ce que** les segments de polymère sont le polyamide ou le polyester.

3. Composition piégeuse d'oxygène selon la revendication 1 ou 2, **caractérisée en ce que** le polycondensat est le (co)polyamide ou le (co)polyester ou des mélanges de ceux-ci.

4. Composition piégeuse d'oxygène selon l'une quelconque des revendications 1 à 3, **caractérisée en ce que** le polycondensat et les segments de polymère sont du même type.

5. Composition piégeuse d'oxygène selon l'une quelconque des revendications 1 à 4, **caractérisée en ce que** la quantité de segments de polyoxy-1,2-propanediyle est de 0,5 à 50 % en poids par rapport à la composition.

6. Composition piégeuse d'oxygène selon la revendication 5, **caractérisée en ce que** ladite quantité est dans la gamme de 1 à 30 % en poids.

7. Composition piégeuse d'oxygène selon l'une quelconque des revendications 1 à 6, **caractérisée en ce que** les segments de polyoxy-1,2-propanediyle sont présents sous forme de conglomérats et au plus 25 % des conglomérats ont une taille supérieure à 500 nm.

8. Composition piégeuse d'oxygène selon l'une quelconque des revendications 1 à 7, **caractérisée en ce que** le catalyseur d'oxydation est un sel ou un complexe de métal de transition.

9. Procédé de préparation d'une composition piégeuse d'oxygène selon l'une quelconque des revendications 1 à 8, **caractérisé en ce qu'**un polycondensat est mélangé à l'état fondu avec un copolymère qui a été préparé par copolymérisation des monomères correspondants constituant les segments de polymères en présence de segments de polyoxy-1,2-propanediyle fonctionnalisés et **en ce qu'**on ajoute un catalyseur d'oxydation.

10. Procédé de préparation d'une composition piégeuse d'oxygène selon l'une quelconque des revendications 1 à 8, **caractérisé en ce que** le copolymère est préparé par copolymérisation des monomères correspondants constituant les segments de polymères en présence de segments de polyoxy-1,2-propanediyle fonctionnalisés et le copolymère est mélangé à l'état fondu avec un polycondensat et **en ce qu'**on ajoute un catalyseur d'oxydation.

11. Utilisation d'une composition piégeuse d'oxygène selon l'une quelconque des revendications 1 à 8 ou préparée selon le procédé des revendications 9 ou 10, pour la préparation d'un objet piégeur d'oxygène.

12. Utilisation selon la revendication 11, **caractérisée en ce que** l'objet est un conteneur pour le conditionnement de l'alimentation humaine, des boissons ou de l'alimentation animale tel qu'un film, une bouteille, un récipient ou un emballage.

13. Utilisation selon la revendication 11, **caractérisée en ce que** l'objet est un objet multicouche dans lequel une couche de la composition piégeuse d'oxygène est en sandwich entre deux couches d'une autre matière.

14. Objet ayant au moins une surface qui est exposée à un environnement contenant de l'oxygène, et comprenant une couche contenant la composition selon l'une quelconque des revendication 1 à 8 ou préparée selon le procédé des revendications 9 ou 10, dans lequel des conglomérats des segments de polyoxy-1,2-propanediyle sont présents, au moins 90 % desdits conglomérats ont une dimension dans au moins une direction spatiale qui est supérieure à une dimension dans au moins une autre direction spatiale d'un facteur d'au moins 1,3, et dans lesquels ladite plus grande dimension s'étend dans une direction parallèle à ladite au moins une surface.

15. Objet selon la revendication 14, **caractérisé en ce que** la dimension d'au plus 25 % des conglomérats dans une direction perpendiculaire à ladite au moins une surface est inférieure à 350 nm.

16. Objet selon la revendication 14, **caractérisé en ce que** l'objet est un conteneur pour le conditionnement de l'alimentation humaine, des boissons ou de l'alimentation animale tel qu'un film, une bouteille, un récipient ou un emballage.

17. Objet selon la revendication 14, **caractérisé en ce que** l'objet est un objet multicouche dans lequel une couche de la composition piégeuse d'oxygène est en sandwich entre deux couches d'une autre matière.
